# EUROPEAN PATENT APPLICATION

(11) **EP 4 270 258 A1**
(43) Date of publication of application: **01.11.2023**
(21) Application number: 20966877.1
(22) Date of filing: 23.12.2020
(51) Int. Cl.: G06N 5/02

(54) **RULE UPDATING PROGRAM, RULE UPDATING METHOD, AND RULE UPDATING DEVICE**

(71) Applicant: FUJITSU LIMITED, Kawasaki-shi, Kanagawa 211-8588 (JP)
(72) Inventor: ASAI, Tatsuya, Kawasaki-shi, Kanagawa 211-8588 (JP)
(74) Representative: Hoffmann Eitle
(86) International application number: PCT/JP2020/048158
(87) International publication number: WO 2022/137386

(57) **Abstract**

A rule update device receives first appropriateness determination regarding at least some determination rules among a plurality of determination rules derived through machine learning by using training data. The rule update device performs second appropriateness determination for the determination rules other than the some rules, based on a result of the first appropriateness determination and similarity between the some determination rules and the determination rules other than the some rules. The rule update device updates the plurality of determination rules, based on the result of the first appropriateness determination and the result of the second appropriateness determination.

## Description

### FIELD

The present disclosure relates to a rule update program or the like.

### BACKGROUND

With respect to an "answer" derived by artificial intelligence (AI), "explainable AI" which can explain why the "answer" is derived has attracted attention. For example, as the explainable AI, there is AI that comprehensively extracts combinations of items from data to be trained and presents a hypothesis (rule) to be the basis for determination that is easy for humans to understand.

Furthermore, there is related art that prepares an interface that can set a parameter of AI, resets the parameter using the interface in a case where a rule set output by the AI is different from a user's intended rule set, and causes the AI to output the rule set again.

### SUMMARY

### TECHNICAL PROBLEM

For example, the related art that resets a parameter of AI using an interface interactively corrects a constraint condition for an entire rule set output from the AI and updates the output rule set in a form in which user's intention is more reflected.

However, with the related art described above, it is difficult for a user to confirm each rule by comparing the rule with knowledge and experience of the user, correct the rule as necessary, and update a rule set so that the corrected rule is reflected. This is because it is difficult for the user to recognize and understand all of a large number of rules output by the AI and to correct the rules by comparing the rules with the experience and the knowledge of the user.

In one aspect, an object of the present disclosure is to provide a rule update program, a rule update method, and a rule update device that can optimize a rule set without imposing a burden on a user.

### SOLUTION TO PROBLEM

In a first option, a computer is caused to execute the following processing. In the computer, a rule update device receives first appropriateness determination regarding at least some determination rules among a plurality of determination rules derived through machine learning using training data. The computer performs second appropriateness determination for the determination rules other than the some rules, based on a result of the first appropriateness determination and similarity between the some determination rules and the determination rules other than the some rules. The computer updates the plurality of determination rules, based on the result of the first appropriateness determination and the result of the second appropriateness determination.

### ADVANTAGEOUS EFFECTS OF INVENTION

A rule set can be optimized without imposing a burden on a user.

### BRIEF DESCRIPTION OF DRAWINGS

FIG. 1 is a diagram for explaining processing of a rule update device according to the present embodiment;
FIG. 2 is a functional block diagram illustrating a configuration of the rule update device according to the present embodiment;
FIG. 3 is a diagram illustrating an example of a data structure of a rule set;
FIG. 4 is a diagram illustrating an example of a data structure of a labeled rule;
FIG. 5 is a diagram (1) illustrating an example of screen information generated by a display control unit;
FIG. 6 is a diagram (2) illustrating an example of the screen information generated by the display control unit;
FIG. 7 is a diagram for explaining processing of a determination unit;
FIG. 8 is a diagram (1) illustrating an example of a classification result generated by the display control unit;
FIG. 9 is a diagram (2) illustrating an example of the classification result generated by the display control unit;
FIG. 10 is a flowchart (1) illustrating a processing procedure of the rule update device according to the present embodiment;
FIG. 11 is a flowchart (2) illustrating the processing procedure of the rule update device according to the present embodiment; and
FIG. 12 is a diagram illustrating an example of a hardware configuration of a computer that implements functions similar to those of the rule update device according to the embodiment.

### DESCRIPTION OF EMBODIMENTS

Hereinafter, an embodiment of a rule update program, a rule update method, and a rule update device disclosed in the present application will be described in detail with reference to the drawings. Note that the embodiment does not limit the present invention.

### [Embodiment]

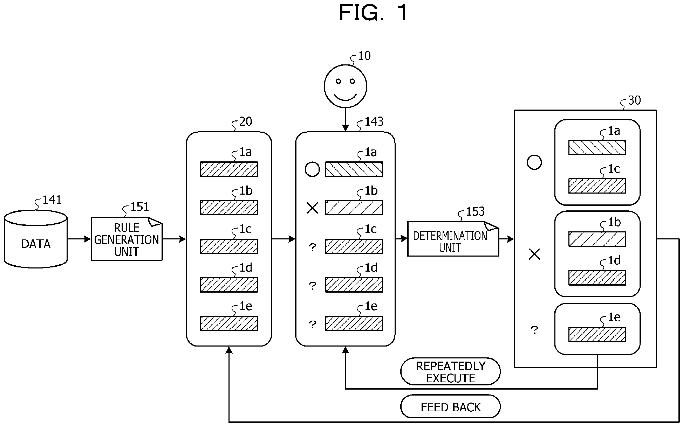

FIG. 1 is a diagram for explaining processing of a rule update device according to the present embodiment. Upon receiving an input of data 141, a rule generation unit 151 of the rule update device generates a rule group 20 based on the data 141. The rule generation unit 151 derives the rule group 20, based on a training model machine-learned with training data.

In the example illustrated in FIG. 1, the rule group 20 includes rules 1a, 1b, 1c, 1d, and 1e. For example, the rules 1a to 1e indicate whether or not a hypothesis (combination of explanatory variables) satisfies a specific condition. Although not illustrated, the rule group 20 may include a rule other than the rules 1a to 1e. In the following description, in a case where the rules 1a to 1e and another rule which is not illustrated are not particularly distinguished, the rules are simply referred to as a rule. The rule corresponds to a "determination rule".

The rule update device makes a display device display information regarding the rule group 20 and provides an interface used to add labels to be described later to the rules 1a to 1e to a user 10. The user 10 refers to the rules 1a to 1e of the rule group 20 and adds the label on the interface, based on one's experience.

For example, the user 10 adds a "first label" to a rule that is determined to be appropriate. The user 10 adds a "second label" to a rule that is determined to be inappropriate. The user 10 adds an "unclassified label" to a rule that cannot be determined whether or not the rule is appropriate. In the present embodiment, appropriately, the first label is illustrated as a "circle", the second label is illustrated as a "cross", and the unclassified label is illustrated as a "question mark". In initial setting, the unclassified label may be set to each rule of the rule group 20, and the user 10 may add the first label or the second label.

The rule update device generates a labeled rule 143, based on a result of adding the label indicating whether or not the rule is appropriate from the user 10. In the example illustrated in FIG. 1, in the labeled rule 143, the first label is added to the rule 1a, the second label is added to the rule 1b, and the unclassified labels are added to the rules 1c, 1d, and 1e.

A determination unit 153 of the rule update device determines whether or not the rules 1c to 1e are appropriate based on similarity between the rules 1a and 1b to which the first label or the second label is added and the remaining rules 1c to 1e, among the rules 1a to 1e included in the labeled rule 143.

For example, in a case where appropriateness of the rule 1c can be reliably led from the similarity between the rules 1a and 1b and the rule 1c, the determination unit 153 adds the first label to the rule 1c. In a case where inappropriateness of the rule 1d can be reliably led from the similarity between the rules 1a and 1b and the rule 1d, the determination unit 153 adds the second label to the rule 1d.

In a case where whether or not the rule 1e is appropriate cannot be reliably led from the similarity between the rules 1a and 1b and the rule 1e, the determination unit 153 keeps the label of the rule 1e as the unclassified label.

A rule update device notifies the user 10 of a classification result 30 obtained by classifying the rules 1a to 1e for each type of the label by displaying the classification result 30 on the display device. In the example illustrated in FIG. 1, the rules 1a and 1c are classified into a group of the first label, the rules 1b and 1d are classified into a group of the second label, and the rule 1e is classified into a group of the unclassified label.

The user 10 refers to the classification result 30 and adds a label indicating whether or not the rule is appropriate only to a rule of which appropriateness can be newly determined, on the interface. For example, the user 10 refers to the classification result 30, and in a case where it can be determined whether or not the rule, to which the unclassified label is added, is appropriate, the user 10 adds the first label or the second label to the rule to which the unclassified label is added.

In a case where the label is added from the user 10 again, the determination unit 153 determines whether or not remaining rules are appropriate, based on similarity between the rule to which the first label or the second label is added and the remaining rules, and displays a classification result.

The rule update device repeatedly executes processing for receiving the addition of the label by the user 10 and processing for determining whether or not the remaining rules are appropriate, based on the similarity between the rule to which the first label or the second label is added and the remaining rules and displaying the classification result.

Furthermore, the rule update device feeds back to the rule group 20, based on a result of the label addition obtained by repeatedly executing the processing. For example, the rule update device deletes the rule to which the second label is added from the rule group 20. As described above, the rule to which the second label is added is an inappropriate rule.

As described above, the rule update device receives the addition of the labels to some rules from the user 10, among the rules in the rule group 20 and determines labels to be added to the remaining rules, based on the similarity between the rules to which the label is added and the remaining rules. The rule update device executes processing for updating the rule group 20, based on the label added to the rule. In this way, since the rule group is updated by adding the label to the rule of which the appropriateness can be determined by the user 10, the rule set can be optimized without imposing a burden on the user 10.

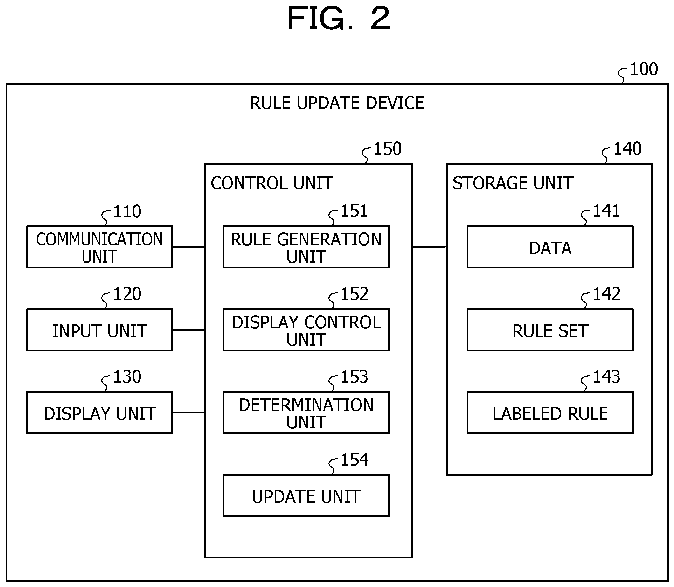

Next, an example of a configuration of the rule update device according to the present embodiment will be described. FIG. 2 is a functional block diagram illustrating the configuration of the rule update device according to the present embodiment. As illustrated in FIG. 2, this rule update device 100 includes a communication unit 110, an input unit 120, a display unit 130, a storage unit 140, and a control unit 150.

The communication unit 110 is wiredly or wirelessly coupled to an external device or the like, and exchanges information with the external device or the like. For example, the communication unit 110 is implemented by a network interface card (NIC) or the like. The control unit 150 may acquire the data 141 to be described later, via the communication unit 110.

The input unit 120 is an input device that inputs various types of information into the rule update device 100. The input unit 120 corresponds to a keyboard, a mouse, a touch panel, or the like. For example, the user 10 operates the input unit 120 and adds a label to a rule.

The display unit 130 is a display device that displays information output from the control unit 150. The display unit 130 corresponds to a liquid crystal display, an organic electro luminescence (EL) display, a touch panel, or the like. For example, the display unit 130 displays information regarding the rule group 20, the classification result 30, or the like.

The storage unit 140 includes the data 141, a rule set 142, and the labeled rule 143. The storage unit 140 is implemented by, for example, a semiconductor memory element such as a random access memory (RAM) or a flash memory, or a storage device such as a hard disk or an optical disk.

The data 141 includes data of a plurality of hypotheses. The hypothesis is a combination of objective variables, and a label indicating whether or not the hypothesis satisfies a specific condition is added. For example, a hypothesis obtained by combining a plurality of hypotheses, based on the plurality of hypotheses included in the data 141 and a rule group (rule set 142) to which a label indicating whether or not the hypothesis satisfies a predetermined condition is added are generated by the rule generation unit 151.

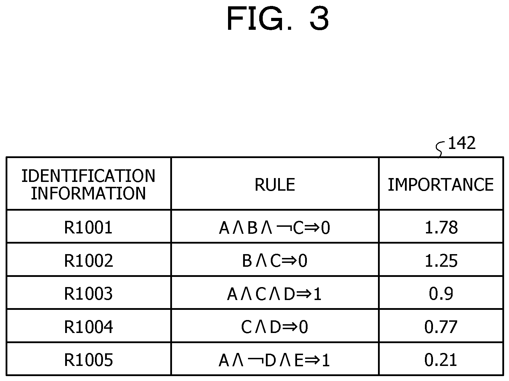

The rule set 142 holds data of the rule group generated by the rule generation unit 151, based on the data 141. FIG. 3 is a diagram illustrating an example of a data structure of a rule set. As illustrated in FIG. 3, the rule set 142 associates identification information, a rule, and an importance. The identification information is information used to uniquely identify a rule.

The rule indicates whether or not a combination of explanatory variables satisfies a specific condition. The reference "Λ" indicates an AND condition. The reference "¬" denies an immediately subsequent explanatory variable. The number "1" indicates that the specific condition is satisfied, and the number "0" indicates that the specific condition is not satisfied. Although not illustrated in FIG. 3, an OR condition or the like may be included in the rule.

In a rule of identification information "R1001", "A", "B", and "denial of C" indicates "0 (does not satisfy specific condition)". As an example, in a case of "A (carnivorous), "B (with backbone)", and "¬ C (with no hair)", this indicates "(0) not a mammal".

In a rule of identification information "R1003", "A", "B", and "D" indicate "1 (satisfy specific condition)". As an example, in a case of "A (carnivorous)", "B (with backbone)", and "D (with teeth)", this indicates "(1) a mammal".

The importance indicates how important the rule is to derive "0" or "1". For example, both of the rule of the identification information "R1001" and the rule of the identification information "R1002" are rules that derive "0". Since the importance of the rule of the identification information "R1001" is higher than the importance of the rule of the identification information "R1002", this means that the rule of the identification information "R1001" is more important than the rule of the identification information "R1002" as the rule for deriving "0".

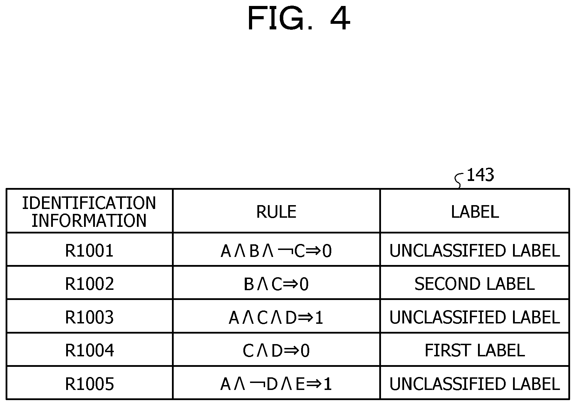

The labeled rule 143 is information indicating a label added to a rule. FIG. 4 is a diagram illustrating an example of a data structure of a labeled rule. As illustrated in FIG. 4, the labeled rule 143 associates identification information, a rule, and a label. Description about the identification information and the rule is similar to the description about the identification information and the rule described with reference to FIG. 3.

The label is a label that indicates whether a corresponding rule is appropriate or inappropriate, or of which appropriateness is unknown. The "first label" is set to an appropriate rule. The "second label" is set to an inappropriate rule. The "unclassified label" is set to a rule of which appropriateness is unknown.

The description returns to FIG. 2. The control unit 150 includes the rule generation unit 151, a display control unit 152, the determination unit 153, and an update unit 154. The control unit 150 is implemented by, for example, a central processing unit (CPU) or a micro processing unit (MPU). Furthermore, the control unit 150 may be implemented by, for example, an integrated circuit such as an application specific integrated circuit (ASIC) or a field programmable gate array (FPGA).

The rule generation unit 151 generates the rule set 142, by inputting the data 141 into a training model that has performed machine learning, according to training data. For example, for the processing for generating the rule set 142 by the rule generation unit 151, a technique described in Patent Document (Japanese Laid-open Patent Publication No. 2020-46888) or the like or another technique may be used. The rule generation unit 151 stores the generated rule set 142 in the storage unit 140. The rule set 142 corresponds to the rule group 20 described with reference to FIG. 1.

The display control unit 152 generates screen information (interface) used to add a label to a rule based on the rule set 142 and causes the display unit 130 to display the generated screen information. The user 10 who has referred to the screen information operates the input unit 120 and adds a label to each rule. The display control unit 152 specifies a relationship between the rule and the label based on the input from the user 10 and sets the specified result to the labeled rule 143.

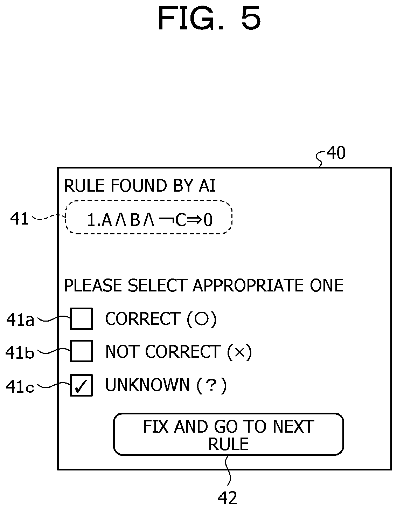

FIG. 5 is a diagram (1) illustrating an example of the screen information generated by the display control unit. In the example illustrated in FIG. 5, rules of the rule set 142 are displayed one by one, and designation of a label from the user 10 is received. For example, in screen information 40, a rule is illustrated in a region 41. In a case of determining that the rule is appropriate, the user 10 checks a region 41a. In a case of determining that the rule is inappropriate, the user 10 checks a region 41b. In a case where the user 10 cannot determine whether or not the rule is appropriate, the user 10 checks a region 41c. In a case of fixing the determination and confirming a next rule, the user 10 presses a button 42.

In a case illustrated in FIG. 5, the region 41c is checked. Therefore, the display control unit 152 specifies that a label added to the rule (rule of identification information "R1001") displayed in the region 41 is the "unclassified label" and registers that in the labeled rule 143.

In a case of receiving the press of the button 42, the display control unit 152 generates screen information corresponding to FIG. 5 for the next rule and repeatedly executes the processing described above until addition of labels to all rules is completed. In a case of displaying screen information of the last rule, the display control unit 152 may display that this is the last rule in the screen information.

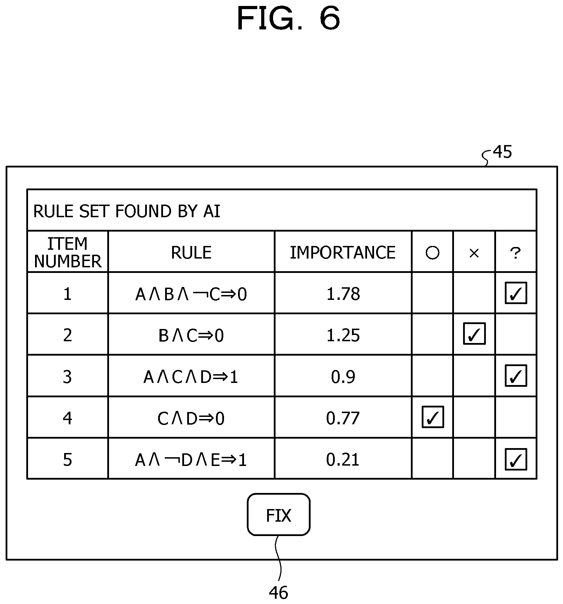

FIG. 6 is a diagram (2) illustrating an example of the screen information generated by the display control unit. In the example illustrated in FIG. 6, the individual rules included in the rule set 142 are arranged in a line and displayed. In a case where an importance is set to a rule, the display control unit 152 displays each rule in descending order of the importance.

In screen information 45 in FIG. 6, input regions for a "circle", a "cross", and a "question mark" are set for each rule. In a case of determining that the rule is appropriate, the user 10 checks the region corresponding to the "circle". In a case of determining that the rule is inappropriate, the user 10 checks the region corresponding to the "cross". In a case where the user 10 cannot determine whether or not the rule is appropriate, the user 10 checks the region corresponding to the "question mark". In a case of fixing the input of the check for each rule, the user 10 presses a button 46.

In a case where the button 46 is pressed, the display control unit 152 specifies the checked region for each rule and specifies a relationship between the rule and the label. In the example illustrated in FIG. 6, since checks for rules of item numbers 1, 3, and 5 are set to the input regions of the "question mark", the display control unit 152 specifies that labels of the rules of the item numbers 1, 3, and 5 are the "unclassified labels".

In the example illustrated in FIG. 6, since a check for a rule of an item number 2 is set to the input region of the "cross", the display control unit 152 specifies that a label of the rule of the item number 2 is the "second label". Since a check for a rule of an item number 4 is set to the input region of the "circle", the display control unit 152 specifies that a label of the rule of the item number 4 is the "first label".

The description returns to FIG. 2. The determination unit 153 specifies the rule to which the first label or the second label is added and the rule to which the unclassified label is added, based on the labeled rule 143. In a case where the determination unit 153 can derive a probable result based on similarity between the rule to which the first label or the second label is added and the rule to which the unclassified label is added, the determination unit 153 adds the first label or the second label to the rule to which the unclassified label is added.

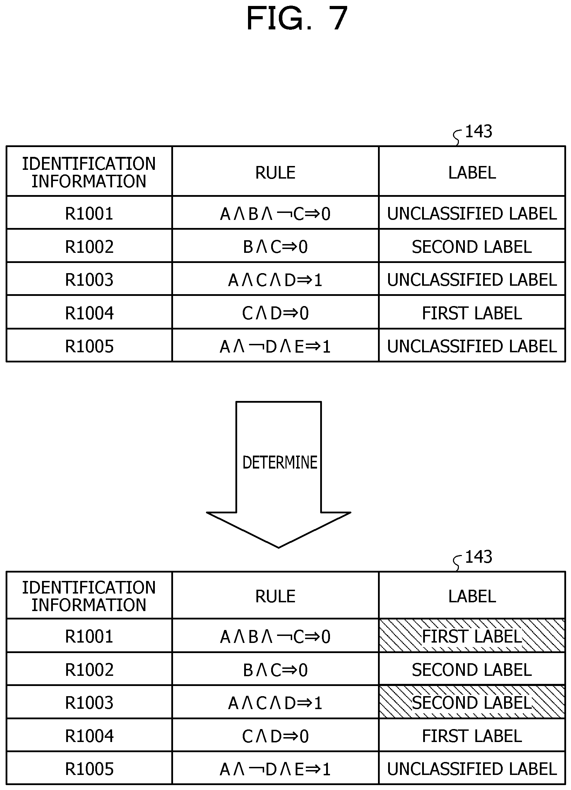

FIG. 7 is a diagram for explaining processing of the determination unit. A case will be described where the determination unit 153 determines the label of the identification information "R1001". Since the second label (inappropriate) is added to the rule "B Λ C ⇒ 0" of the identification information "R1002", the determination unit 153 reliably assumes that "B Λ C ⇒ 1". Then, the determination unit 153 can reliably derive rules "¬ B Λ C ⇒ 0" and "B Λ ¬ C ⇒ 0". Here, by using the rule "B Λ ¬ C ⇒ 0", the determination unit 153 determines that a rule "A Λ B Λ ¬ C ⇒ 0" of the identification information "R1001" is reliably "appropriate". The determination unit 153 sets the label of the identification information "R1001" to the "first label".

A case will be described where the determination unit 153 determines a label of the identification information "R1003". Since the first label (appropriate) is added to a rule "C Λ D ⇒ 0" of identification information "R1004", the determination unit 153 reliably assumes that "C Λ D ⇒ 0". Here, by using the rule "C Λ D ⇒ 0", the determination unit 153 determines that a rule "A Λ C Λ D ⇒ 1" of the identification information "R1003" is reliably "inappropriate". The determination unit 153 sets the label of the identification information "R1003" to the "second label".

A case will be described where the determination unit 153 determines a label of identification information "R1005". A rule "A Λ ¬ D Λ E ⇒ 1" of the identification information "R1005" has low similarity with the rule to which the first label or the second label is added by the user 10. Therefore, the determination unit 153 cannot reliably determine whether the "first label" is added or the "second label" is added. Therefore, the determination unit 153 keeps the label of the identification information "R1005" as the "unclassified label".

In a case where the determination described above has been completed, the determination unit 153 outputs information indicating that the determination has been completed to the display control unit 152.

In a case of receiving the information indicating that the determination has been completed from the determination unit 153, the display control unit 152 generates information regarding a classification result and displays the information (screen information) regarding the classification result on the display unit 130. The user 10 refers to the information regarding the classification result, operates the input unit 120 about a rule of which appropriateness can be determined, and adds the first label or the second label.

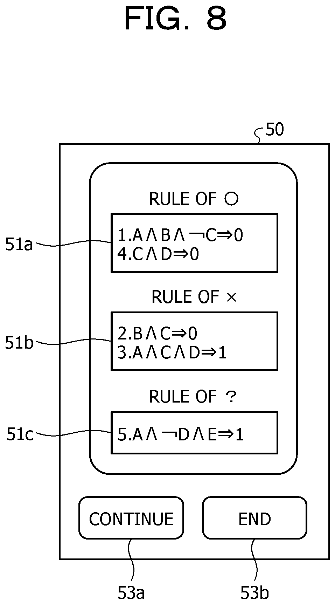

FIG. 8 is a diagram (1) illustrating an example of the classification result generated by the display control unit. In the example illustrated in FIG. 8, in screen information 50 of a classification result, regions 51a, 51b, and 51c are set. The region 51a is a region where a rule to which the first label is added is displayed. For example, in a case where the first label is added (updated) to the rule "A Λ B Λ ¬ C ⇒ 0" by the determination unit 153, the display control unit 152 highlights "A Λ B Λ ¬ C ⇒ 0".

The region 51b is a region where a rule to which the second label is added is displayed. For example, in a case where the second label is added (updated) to the rule "A Λ C Λ D ⇒ 1" by the determination unit 153, the display control unit 152 highlights "A Λ C Λ D ⇒ 1".

The region 51c is a region where a rule to which the unclassified label is added is displayed. In a case where the user 10 can determine the label of the rule in the region 51c based on a relationship between the rules in the regions 51a and 51b and the labels, the user 10 operates the input unit 120 and adds the first label or the second label to the rule in the region 51c. The display control unit 152 receives the input from the user 10 and updates the labeled rule 143.

In a case of continuing the processing for adding a label to a rule, the user 10 presses a button 53a. In a case of ending the processing for adding a label to a rule, the user 10 presses a button 53b.

The display control unit 152 and the determination unit 153 repeatedly execute the processing described above each time when the user 10 presses the button 53a. In a case where the button 53b is pressed by the user 10, the display control unit 152 and the determination unit 153 end the processing for setting a label to the labeled rule 143. Note that, in a case of generating screen information again, the display control unit 152 may select only a rule to which an unclassified label is added, based on the labeled rule 143, display the selected rule on the display unit 130, and receive designation of the label by the user 10.

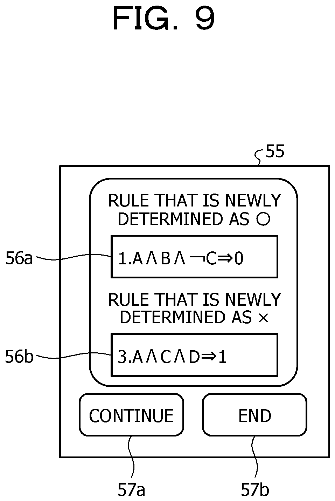

FIG. 9 is a diagram (2) illustrating an example of the classification result generated by the display control unit. In the example illustrated in FIG. 9, in screen information 55 of a classification result, regions 56a and 56b are set. The region 56a is a region where only a rule to which the first label is added and that has been updated this time is displayed. The region 56b is a region where only a rule to which the second label is added and that has been updated this time is displayed.

The user 10 refers to the screen information 55 of the classification result illustrated in FIG. 9, and operates the input unit 120. In a case where the user 10 can determine whether or not the rule to which the unclassified label is added is appropriate, the user 10 adds the first label or the second label.

In a case of continuing the processing for adding a label to a rule, the user 10 presses a button 57a. In a case of ending the processing for adding a label to a rule, the user 10 presses a button 57b.

The display control unit 152 and the determination unit 153 repeatedly execute the processing described above each time when the user 10 presses the button 57a. In a case where the button 57b is pressed by the user 10, the display control unit 152 and the determination unit 153 end the processing for setting a label to the labeled rule 143. Note that, in a case of generating screen information again, the display control unit 152 may select only a rule to which an unclassified label is added, based on the labeled rule 143, display the selected rule on the display unit 130, and receive designation of the label by the user 10.

By the way, the display control unit 152 and the determination unit 153 calculate a ratio of the rules to which the "unclassified label" is added, among all the rules included in the labeled rule 143, and in a case where the calculated ratio is equal to or less than a threshold σ, the display control unit 152 and the determination unit 153 may end the processing for setting a label to the labeled rule 143. In a case of ending the processing for setting a label, the determination unit 153 outputs an update request to the update unit 154.

In a case of acquiring the update request from the determination unit 153, the update unit 154 updates the rule set 142, based on the labeled rule 143. For example, the update unit 154 specifies identification information of a rule to which the second label is added, in the labeled rule 143. The update unit 154 updates the rule set 142 by deleting the rule corresponding to the specified identification information from the rule set 142.

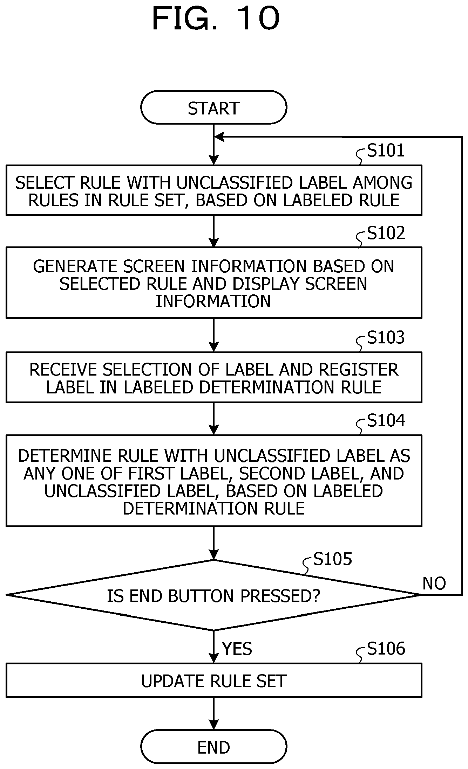

Next, an example of a processing procedure of the rule update device 100 according to the present embodiment will be described. FIG. 10 is a flowchart (1) illustrating the processing procedure of the rule update device according to the present embodiment. In FIG. 10, a procedure for continuing processing until receiving pressing of an end button by the user 10 by the rule update device 100 is illustrated.

As illustrated in FIG. 10, the display control unit 152 of the rule update device 100 selects a rule with the unclassified label among the rule set 142, based on the labeled rule 143 (step S101).

The display control unit 152 generates screen information based on the selected rule and displays the screen information on the display unit 130 (step S102). The display control unit 152 receives the selection of the label from the user 10 who operates the input unit 120 and registers the label in the labeled rule 143 (step S103).

The determination unit 153 of the rule update device 100 determines the rule with the unclassified label as any one of the first label, the second label, or the unclassified label, based on the labeled rule 143 (step S104). In a case where the end button is not pressed by the user 10 (step S105, No), the rule update device 100 proceeds to step S101.

On the other hand, in a case where the end button is pressed by the user 10 (step S105, Yes), the rule update device 100 proceeds to step S106. The update unit 154 of the rule update device 100 updates the rule set 142 based on the labeled rule 143.

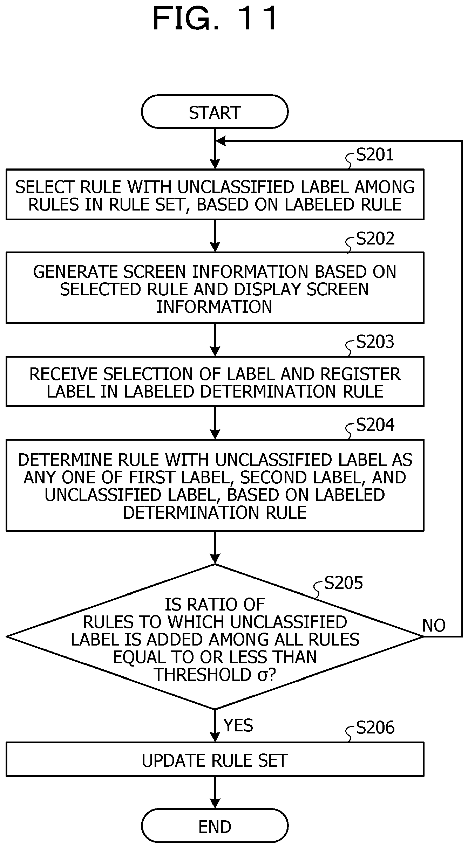

FIG. 11 is a flowchart (1) illustrating a processing procedure of the rule update device according to the present embodiment. In FIG. 11, a procedure for continuing processing by the rule update device 100 until a ratio of rules to which the unclassified label is added becomes equal to or less than the predetermined threshold σ is illustrated.

As illustrated in FIG. 11, the display control unit 152 of the rule update device 100 selects a rule with the unclassified label among the rule set 142, based on the labeled rule 143 (step S201).

The display control unit 152 generates screen information based on the selected rule and displays the screen information on the display unit 130 (step S202). The display control unit 152 receives the selection of the label from the user 10 who operates the input unit 120 and registers the label in the labeled rule 143 (step S203).

The determination unit 153 of the rule update device 100 determines the rule with the unclassified label as any one of the first label, the second label, or the unclassified label, based on the labeled rule 143 (step S204). In a case where the ratio of the rules to which the unclassified label is added among all the rules is not equal to or less than the threshold σ (step S205, No), the rule update device 100 proceeds to step S201.

On the other hand, in a case where the ratio of the rules to which the unclassified label is added among all the rules is equal to or less than the threshold σ (step S205, Yes), the rule update device 100 proceeds to step S206. The update unit 154 of the rule update device 100 updates the rule set 142 based on the labeled rule 143.

Next, effects of the rule update device 100 according to the present embodiment will be described. The rule update device 100 receives the addition of the label to some rules from the user 10, among the rules in the rule group 20 and determines labels to be added to the remaining rules, based on the similarity between the rule to which the label is added and the remaining rules. The rule update device 100 executes processing for updating the rule group 20, based on the label added to the rule. In this way, since the rule group is updated by adding the label to the rule of which the appropriateness can be determined by the user 10, the rule set can be optimized without imposing a burden on the user 10.

In a case where an importance is set to a rule, the rule update device 100 displays the rules in descending order of the importance. As a result, the user 10 more easily determines appropriateness of the rule with a larger importance.

In a case where the rule to which the first label or the second label is added is similar to the rule included in the rules to which the unclassified label is added, the rule update device 100 specifies a rule that derives a probable result. Then, the rule update device 100 determines whether or not the rule with the unclassified label is appropriate, based on the specified rule. As a result, the rule with the unclassified label can be automatically classified into the first label or the second label.

The rule update device 100 deletes the rule to which the second label is added from the rule set, based on the labeled rule 143. As a result, an appropriate rule can be left in the rule set 142.

Furthermore, with the rule update device 100, it is possible for the user to confirm each rule of a huge rule set to be generated and correct a rule that can be understood as necessary, with the rule generation unit 151. Here, even if the user cannot understand all the rules, the user can automatically confirm other rules so as to be appropriate with respect to the confirmation result of the user, by confirming the rules as possible. By repeating this operation several times, it is possible to confirm most of the rule set and can update the rule set as necessary.

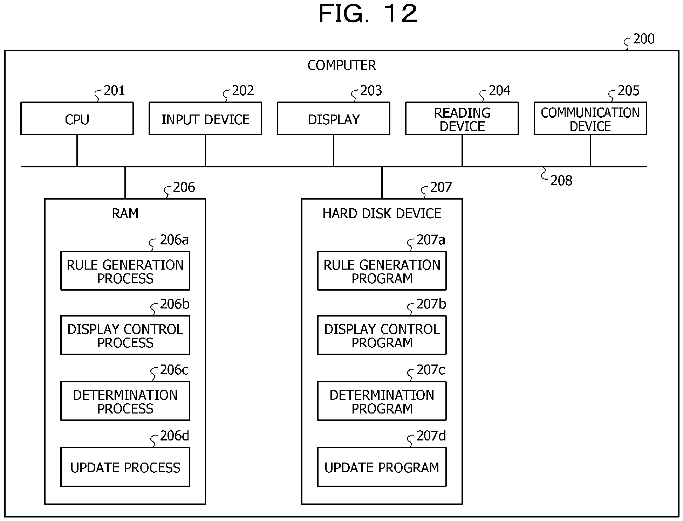

Next, an example of a hardware configuration of a computer that implements functions similar to those of the rule update device 100 indicated in the embodiment described above will be described. FIG. 12 is a diagram illustrating an example of the hardware configuration of the computer that implements the functions similar to those of the rule update device according to the embodiment.

As illustrated in FIG. 12, a computer 200 includes a CPU 201 that executes various types of arithmetic processing, an input device 202 that receives data input from a user, and a display 203. Furthermore, the computer 200 includes a reading device 204 that reads a program or the like from a storage medium, and a communication device 205 that exchanges data with another external device or the like via a wired or wireless network. Furthermore, the computer 200 includes a RAM 206 that temporarily stores various types of information, and a hard disk device 207. Then, each of the devices 201 to 207 is coupled to a bus 208.

The hard disk device 207 includes a rule generation program 207a, a display control program 207b, a determination program 207c, and an update program 207d. Furthermore, the CPU 201 reads each of the programs 207a to 207d, and loads them into the RAM 206.

The rule generation program 207a functions as a rule generation process 206a. The display control program 207b functions as a display control process 206b. The determination program 207c functions as a determination process 206c. The update program 207d functions as an update process 206d.

Processing of the rule generation process 206a corresponds to the processing of the rule generation unit 151. Processing of the display control process 206b corresponds to the processing of the display control unit 152. Processing of the determination process 206c corresponds to the processing of the determination unit 153. Processing of the update process 206d corresponds to the processing of the update unit 154.

Note that each of the programs 207a to 207d does not necessarily have to be stored in the hard disk device 207 beforehand. For example, each of the programs is stored in a "portable physical medium" to be inserted into the computer 200, such as a flexible disk (FD), a CD-ROM, a DVD, a magneto-optical disk, or an IC card. Then, the computer 200 may read and execute each of the programs 207a to 207d.

### CITATION LIST

### PATENT DOCUMENT

Patent Document 1: Japanese Laid-open Patent Publication No. 11-15842

### REFERENCE SIGNS LIST

- 100: Rule update device
- 110: Communication unit
- 120: Input unit
- 130: Display unit
- 140: Storage unit
- 141: Data
- 142: Rule set
- 143: Labeled rule
- 150: Control unit
- 151: Rule generation unit
- 152: Display control unit
- 153: Determination unit
- 154: Update unit

## Claims

1. A rule update program for causing a computer to execute processing comprising:
receiving first appropriateness determination for at least some determination rules among a plurality of determination rules derived through machine learning by using training data;
performing second appropriateness determination for a determination rule other than the some determination rules, based on a result of the first appropriateness determination and similarity between the some determination rules and the determination rule other than the some determination rules; and
updating the plurality of determination rules, based on the result of the first appropriateness determination and a result of the second appropriateness determination.

2. The rule update program according to claim 1, the processing further comprising: displaying the plurality of determination rules in order of an importance, wherein the importance is set to the plurality of determination rules.

3. The rule update program according to claim 1, wherein a first determination rule included in the some determination rules and a second determination rule included in the determination rules other than the some determination rules are similar determination rules, and
the performing of the second appropriateness determination specifies a rule with which a probable result is derived from a result of the first appropriateness determination for the first determination rule, and executes the second appropriateness determination for the second determination rule, based on the specified rule.

4. The rule update program according to claim 1, wherein the result of the first appropriateness determination and the result of the second appropriateness determination are information in which a first label that indicates that the determination rule is correct or a second label that indicates that the determination rule is not correct is associated with the determination rule, and
the updating executes processing of deleting a determination rule to which the second label is added from the plurality of determination rules.

5. A rule update method implemented by a computer, the method comprising:
receiving first appropriateness determination for at least some determination rules among a plurality of determination rules derived through machine learning by using training data;
performing second appropriateness determination for a determination rule other than the some determination rules, based on a result of the first appropriateness determination and similarity between the some determination rules and the determination rule other than the some determination rules; and
updating the plurality of determination rules, based on the result of the first appropriateness determination and a result of the second appropriateness determination.

6. The rule update method according to claim 5, further comprising: displaying the plurality of determination rules in order of an importance, wherein the importance is set to the plurality of determination rules.

7. The rule update method according to claim 5, wherein a first determination rule included in the some determination rules and a second determination rule included in the determination rules other than the some determination rules are similar determination rules, and
the performing of the second appropriateness determination specifies a rule with which a probable result is derived from a result of the first appropriateness determination for the first determination rule, and executes the second appropriateness determination for the second determination rule, based on the specified rule.

8. The rule update method according to claim 5, wherein the result of the first appropriateness determination and the result of the second appropriateness determination are information in which a first label that indicates that the determination rule is correct or a second label that indicates that the determination rule is not correct is associated with the determination rule, and
the updating executes processing of deleting a determination rule to which the second label is added from the plurality of determination rules.

9. A rule update apparatus comprising:
a determination unit configured to
receive first appropriateness determination for at least some determination rules among a plurality of determination rules derived through machine learning by using training data, and
perform second appropriateness determination for a determination rule other than the some determination rules, based on a result of the first appropriateness determination and similarity between the some determination rules and the determination rule other than the some determination rules; and
an update unit configured to update the plurality of determination rules, based on the result of the first appropriateness determination and a result of the second appropriateness determination.

10. The rule update apparatus according to claim 9, further comprising:
a display control unit configured to display the plurality of determination rules in order of an importance, wherein the importance is set to the plurality of determination rules.

11. The rule update apparatus according to claim 9, wherein a first determination rule included in the some determination rules and a second determination rule included in the determination rules other than the some determination rules are similar determination rules, and
the performing of the second appropriateness determination specifies a rule with which a probable result is derived from a result of the first appropriateness determination for the first determination rule, and executes the second appropriateness determination for the second determination rule, based on the specified rule.

12. The rule update apparatus according to claim 9, wherein the result of the first appropriateness determination and the result of the second appropriateness determination are information in which a first label that indicates that the determination rule is correct or a second label that indicates that the determination rule is not correct is associated with the determination rule, and
the updating executes processing of deleting a determination rule to which the second label is added from the plurality of determination rules.
